(19) Europäisches Patentamt
European Patent Office
Office européen des brevets

(11) Publication number: **0 469 891 B1**

(12) # EUROPEAN PATENT SPECIFICATION

(45) Date of publication of patent specification: **03.05.95**

(51) Int. Cl.[6]: **C08G 69/48**, C08G 73/02

(21) Application number: **91307024.9**

(22) Date of filing: **31.07.91**

(54) **Process for the production of improved polyaminopolyamide epichlorohydrin resins.**

(30) Priority: **01.08.90 US 561860**

(43) Date of publication of application:
**05.02.92 Bulletin 92/06**

(45) Publication of the grant of the patent:
**03.05.95 Bulletin 95/18**

(84) Designated Contracting States:
**AT BE CH DE ES FR GB IT LI NL SE**

(56) References cited:
**EP-A- 0 320 121**
**EP-A- 0 374 938**
**US-A- 2 926 116**
**US-A- 2 926 154**
**US-A- 3 197 427**

(73) Proprietor: **HERCULES INCORPORATED**
**Hercules Plaza**
**Wilmington**
**Delaware 19894-0001 (US)**

(72) Inventor: **Miller, Andrew J.**
**30 Gumping Road**
**Orpington,**
**Kent, BR5 1RX (GB)**
Inventor: **Stubbs, Brian Martin**
**13 Tyron Way**
**Sidcup,**
**Kent, DA14 6AY (GB)**

(74) Representative: **Jones, Alan John et al**
**CARPMAELS & RANSFORD**
**43 Bloomsbury Square**
**London, WC1A 2RA (GB)**

EP 0 469 891 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for the production of improved polyaminopolyamide-epichlorohydrin resins. Polyaminopolyamide-epichlorohydrin resins have been used commercially for several decades for such uses as neutrally curing wet strength resins in the manufacture of paper products, as cross-linking agents for carboxylated latices, and as emulsifying and dispersing agents. Polyaminopolyamide-epichlorohydrin resins are defined as resins prepared from an aqueous solution of a polyamide resin having a secondary amine group in its recurring polymer unit and epichlorohydrin. A method of preparation of this kind of resin is found in GB 865,727 to Keim.

While these resins have proven to be remarkably successful for these commercial purposes, environmental and economic considerations expose shortcomings in the synthesis, nature and properties of these commercially available resins.

Some of the drawbacks associated with these resins are the presence of substantial amounts of the low molecular weight epichlorohydrin by-products 1,3-dichloro-2-propanol (DCP) and 1-chloro-2,3-propanediol (CPD) and the presence of a substantial amount of polymer bound organochlorine. DCP and CPD can be detrimental to the environment because of their suspected carcinogenicity and their persistence in the environment. The polymer bound organochlorine arises from the presence of N-chlorohydrin groups.

When these resins are prepared using economically attractive higher solids reaction mixtures (greater than 15%), cross-linking proceeds relatively more rapidly than the simultaneous isomerisation of N-chlorohydrin groups to 3-hydroxyazetidinium chloride groups. Cross-linking leads to viscosity increases in the resins. This results in resins of decreased cationicity compared to resins prepared using lower solids reaction mixtures.

Many known resin syntheses employ molar excesses of epichlorohydrin on polyaminopolyamide in order to effect adequate process control in the resin cross-linking step to reduce the risk of gelation of the reaction mixture. The molar excesses result in higher product costs because of the formation of higher levels of the epichlorohydrin residuals DCP and CPD.

It is the overall object of the invention to provide a process whereby these shortcomings can be simultaneously overcome resulting in resins having substantially lower contents of DCP and CPD; resins having lower contents of polymer bound organohalogen; and resins prepared in such a way that the resin cross-linking reaction is inhibited while the isomerisation of neutral N-chlorohydrin groups to cationic 3-hydroxyazetidinium groups is inhibited to a much lesser extent optionally enabling the use of higher solids reaction mixtures.

Typically polyaminopolyamide-epichlorohydrin resins are prepared by reacting a polyamide, derived from a polyalkylene polyamine and a saturated aliphatic dibasic carboxylic acid containing from 3-10 carbon atoms, with epichlorohydrin. In carrying out the reaction, U.S. Patent 2,926,116 to Keim and GB 865,727 to Keim teach the use of an amount of dibasic acid sufficient to react substantially completely with the primary amine groups of the polyalkylene polyamine but insufficient to react with the secondary amine group to any substantial extent. This will usually require a mole ratio of polyalkylene polyamine to dibasic acid of from 0.8:1 to 1.4:1. This reaction is preferably carried out at temperatures between 160 °C and 210 °C but may vary from 110 °C to 250 °C.

In converting the polyamide, formed as described above, to a cationic thermosetting resin; the polyamide is reacted with epichlorohydrin at a temperature of 45 °C to 100 °C, preferably from 45 °C to 70 °C, until the viscosity of a 20% solids solution at 25 °C has reached C or higher on the Gardner Holdt scale. When the desired viscosity is reached, sufficient water is then added to adjust the solids content of the resin solution to the desired amount, usually 10%. The product is then cooled to 25 °C then stabilized by adding sufficient acid to reduce the pH to 6 and preferably to 5. Any suitable acid such as hydrochloric, sulphuric, nitric, formic, phosphoric, and acetic acid may be used to stabilize the product.

Great Britain Patent 865,727 also discloses that solids concentrations of epichlorohydrin-polyamide adduct of more than 40% solids may be prepared.

U.S. Patent 3,891,589 to Ray-Chaudhuri is a process for preparing cationic thermosetting resins which exhibit improved stability at high total solids content. Epichlorohydrin is added to a polyamide-polyamine intermediate in a concentration ranging from 1.25 to 4.0 moles of epichlorohydrin per equivalent weight of polyamide intermediate. The reaction mixture is heated to 25 °C to 40 °C over a period of 1 to 4 hours. The temperature is then increased to 50 °C to 90 °C. When the desired viscosity is obtained, the resin solution is cooled, diluted, and the pH is adjusted by adding sulfuric, nitric, hydrochloric, oxalic or acetic acid. This process relies on control and selection of the process variables as noted at col. 2, lines 15-16.

U.S. Patent 3,197,427 to Schmaltz discloses in columns 3 and 4 that in the epichlorohydrin-polyamide reaction, 0.5 moles to 1.8 moles of epichlorohydrin per mole of polyamide secondary amine is used. The

patent further discloses that the epichlorohydrin-polyamide reaction may be modified by decreasing the pH of the aqueous polyaminoamide solution to 8.5 to 9.5 with acid prior to the addition of epichlorohydrin or immediately after the addition of epichlorohydrin. Any suitable acid, e.g. mineral acids can be used for this purpose. When the desired viscosity is reached, the product is cooled to 25 °C and then stabilized by reducing the pH to 2.5 to 3.0 by the conjoint use of formic acid and sulfuric acid.

U.S. Patent 4,857,586 to Bachem et al. discloses reacting epichlorohydrin-polyamide reaction products with inorganic bases and subsequent reaction of the resulting compounds which contain epoxy groups with halogen-free acids or derivatives to give compounds containing 1-acyloxy-2-hydroxypropyl groups.

European Patent Application EP 0349,935 describes a reaction in which alkali is added which may then be neutralized or partly neutralized during the synthesis of epichlorohydrin-polyamide resins.

The present invention relates to a process for the synthesis of improved polyaminopolyamide-epichlorohydrin resins, resins when prepared by this process, and to materials treated with the resins prepared by this process.

A key element of the invention is that a specified quantity of a halogen-free mineral acid is added to the reaction mixture after the major part of the epichlorohydrin charge has alkylated the polyaminopolyamide resin. Addition of a halogen-free mineral acid at this time results in lower levels of the epichlorohydrin residuals, DCP and CPD, than would be formed if the halogen-free mineral acid was added prior to or simultaneously with the addition of epichlorohydrin. Other advantages are an improved degree of process control during resin viscosity development and higher degrees of conversion of N-chlorohydrin groups to 3-hydroxyazetidinium chloride groups during the resin cross-linking step, for a given reaction mixture viscosity.

A primary object of the invention is to provide a process for the synthesis of improved epichlorohydrin polyaminopolyamide resins by: (a) enabling higher degrees of conversion of N-chlorohydrin (NCH) groups, to 3-hydroxyazetidinium chloride (AZE) groups particularly for higher solids reactions, and so yielding resins having a lower polymer bound organochlorine content and higher cationicity; (b) enabling resins to be synthesized having lower levels of the epichlorohydrin reaction by-products DCP and CPD; and (c) enabling improved process control by reducing the rate of viscosity increase during the synthesis of the invention resins compared to like resins prepared using prior procedures; and (d) particularly facilitating the synthesis of resins prepared using a molar or submolar ratio of epichlorohydrin to polyaminopolyamide secondary amine content.

While the art disclosures cited above may overlap in any one of these areas, it must be recognized that it is the combined presence of all of these variables in the novel process of this invention that provides the improved and unexpected results.

The invention relates to a process for the synthesis of improved, water soluble polyaminopolyamide-epichlorohydrin resins comprising reacting the polyaminopolyamide resin with epichlorohydrin at a temperature of 20 °C to 60 °C until at least 70% of the total charge of epichlorohydrin has reacted. The liquid polymer solution is then treated with 0.1% to 30% of an equivalent of a halogen-free mineral acid at a temperature of 20 °C to 100 °C. Following the completion of the acid addition, the reaction is continued to effect at least a 10% reduction in the polymer bound organochlorine concentration, based on the composition of the reaction mixture at the time of the acid addition.

While not wishing to be bound by theory, we believe that the addition of a halogen-free mineral acid in accordance with the present invention will extend the time it takes for the resin to cross-link. The longer reaction times encountered by adding acid can be explained by protonation of nucleophilic and basic groups on the polymer chains. Resins prepared using molar or submolar quantities of epichlorohydrin based on the secondary amino content of the polyaminopolyamide resin are likely to be richer in nucleophilic sites than resins prepared using molar excess of epichlorohydrin. These nucleophilic sites are, we believe, capable of reacting with glycidylamine and 3-hydroxy- azetidinium groups to give cross-links. By adding mineral acid at the appropriate time, the nucleopbilic sites are rendered non-nucleophilic through protonation.

Further it is our belief that advantage accrues in adding acid toward the end of the alkylation step to avoid reducing the rate of the epichlorohydrin alkylation reaction through protonation of otherwise epichlorohydrin reactive species on the polymer and thereby permitting the formation of higher concentrations of DCP and CPD epichlorohydrin residuals through epichlorohydrin side reactions.

By reducing the rate of cross-linking of the alkylated resin, the organohalogen-content-reducing reaction of N-chlorohydrin groups cyclizing to non-organohalogen containing 3-hydroxyazetidinium chloride groups can proceed more completely without total resin gelation. We postulate that the N-chlorohydrin group is both a weaker base than other available polymer groups thus it is pro-rata less protonated on acid addition according to the invention and it is less nucleophilic towards the potential resin cross-linking groups such as

glycidylamine and 3-hydroxyazetidinium chloride so the cross-linking rate is reduced.

The present invention relates to a process for the synthesis or manufacture of improved water soluble polyaminopolyamide-epichlorohydrin resins comprising the following steps: 1. reacting an aqueous concentration of 13.5% w/w to 70% w/w, preferably 20% to 60% of polyaminopolyamide resin with 0.05 to 1.5 molar equivalents of epichlorohydrin, based on the secondary amine nitrogen content of the starting polyaminopolyamide resin, at a temperature not exceeding 60 °C and preferably between 20 °C to 45 °C to give a liquid polymer solution wherein 70% to 100%, preferably 90% to 100%, of the total charge of epichlorohydrin has reacted. Preferably 0.5 to 1.1 molar equivalents of epichlorohydrin based on the secondary amine content of the starting polyaminopolyamide resin is used in the reaction; 2. adding between 0.1% and 30%, preferably between 0.5% and 20%, of an equivalent of a halogen-free mineral acid, based on the original secondary amine content of the starting polyaminopolyamide resin, at a temperature of between 20° and 100 °C, preferably between 30 °C and 60 °C. The preferred halogen-free mineral acids are selected from the group consisting of sulphuric, phosphoric, nitric, and sodium hydrogen sulphate; and 3. continuing the reaction at 20 °C to 100 °C, preferably 50 °C to 90 °C to effect at least a 10% reduction in the polymer bound organochlorine concentration, based on the composition of the reaction mixture at the time of the acid addition.

A specific embodiment of the process of the present invention employing sulphuric acid is set forth in Claim 16.

Optionally the process may comprise other steps such as dilution steps and the addition of further acid at the end of the resin synthesis.

Preferred reactants for the synthesis of the starting polyaminopolyamide resins are diethylenetriamine and adipic or glutaric acids.

Resins where molar or submolar ratios of epichlorohydrin on the polyaminopolyamide can be used.

Suitable polyaminopolyamides for this invention are synthesized beforehand and then reacted with epichlorohydrin. Preferred polyaminopolyamides are prepared by the polycondensation of polyalkylene polyamines and dicarboxylic acids or dicarboxylic acid mono or di - $C_1$ -$C_4$ alkyl esters to give water soluble long chain polymers having the following recurring polymer units:

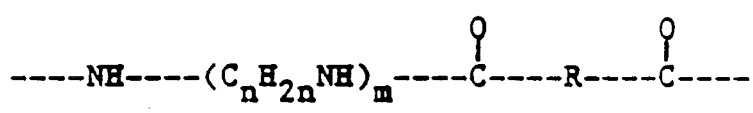

where n and m can be individually 2 or more, and R is a linear $C_1$ to about $C_8$ aliphatic diradical. Deliberately or adventitiously additional chain linkages may be introduced. Thus in the case of the former, ethylene diamine or caprolactam for example may be added and incorporated into the substantially linear polymer. In the case of the latter, impurities in commercial grades of polyalkyleneamines may be introduced through reaction into the polymer structure, perhaps forming chain termini. Such polymers are within the scope and spirit of the invention provided they are water soluble. Accordingly, the present invention further provides a water soluble polyaminopolyamide-epichlorohydrin composition containing from 0.01% to 1.0% epichlorohydrin residual where the epichlorohydrin residual is the sum of the DCP and CPD concentrations, and the composition is prepared by the process of the present invention.

Diethylenetriamine and adipic acid are particularly preferred starting materials for the preparation of the polyaminopolyamides used in the present invention. Typically, the two reactants are blended and heated together under controlled conditions (160 °C-210 °C) in such molar proportions that substantially all the primary amino groups but as few as possible of the secondary amine groups are acylated during the polycondensation reaction. The course and completeness of the polycondensation reaction can be usefully monitored by collecting and measuring the mass or volume of the water condensate.

The present invention chiefly relates to the epichlorohydrin alkylation step and beyond as described above.

<u>Comparative Example 1 and Examples 2-5</u>

To further illustrate the invention by way of examples five resins were prepared; four in accordance with the invention and a control not benefiting from the acid addition.

In each preparation a 50% aqueous solution of a commercial polyaminopolyamide resin (Polymer 567 (P567), Hercules Incorporated.), 300g dry basis, was reacted with the same mole ratio (approximately 0.8

based on the calculated secondary amine nitrogen content of the resin,) of epichlorohydrin (104.3g) for 120 minutes at 40°-45°C. After that time $H_2SO_4$ (98% W/W), was added in accordance with the invention together with dilution water 903.4g and the resulting mixture heated to 60°C until either a Gardner Holdt viscosity of D to E was reached or a 60°C cook time of 150 minutes was exceeded.

The resins were finished by likewise dilution and acidification and the figures were adjusted to a consistent 12.5% total solids basis. In the cases of resins 2 and 3, Gardner Holdt viscosities of B and B+ were obtained respectively. For resins 4 and 5 the Gardner Holdt viscosity of D to E was achieved in 117 and 87 minutes respectively compared to 70 minutes for the control resin. The reaction conditions and results obtained are summarized in Table I.

TABLE 1

| Resin No. | Cook Time mins | % Mole Equivalent $H_2SO_4$/Proticity per Mole of P567 | Mole Ratio $H_2SO_4$/P567 | AOX% | DCP ppm | CPD ppm | PBOC % | % Reduction PBOC |
|---|---|---|---|---|---|---|---|---|
| 1* | 70 | 0 | 0.00 | 0.411 | 434 | 143 | 0.387 | 0 |
| 2 | 150 | 21.2 | 0.106 | 0.258 | 718 | 184 | 0.219 | 43.4 |
| 3 | 150 | 10.8 | 0.054 | 0.236 | 640 | 147 | 0.201 | 48.06 |
| 4 | 117 | 5.2 | 0.026 | 0.267 | 578 | 172 | 0.235 | 39.28 |
| 5 | 87 | 2.6 | 0.013 | 0.322 | 475 | 135 | 0.296 | 23.51 |

* (control)

PBOC (calc) = Calculated Polymer Bound Organochlorine

PBOC = [AOX%] - [(0.55)(DCP%)]

0.55 is the mass fraction of chlorine atoms in DCP

The AOX percentages presented in Table 1 were determined consistent with DIN 38409 1 part 14 which is a West German analytical standard for determining the adsorbable organochlorine content of water, incorporated herein by reference. The DCP and CPD concentrations were determined by gas-liquid chromatography. These results show that the longer reaction times of the test resins have led to lower levels of determined adsorbable organochlorine and polymer bound organochlorine in the finished resins compared to control.

Polymer 1

A copolymer of diethylenetriamine and adipic acid was prepared by heating a mixture of diethylenetriamine (220.5g, 2.14 moles) and adipic acid (344.9g, 2.36 moles) at 170 °C under a Dean and Stark trap for 3 hours. The product was cooled to 150 °C and diluted with water (333g) to give a 49.1% w/w copolymer solution.

Polymer 2

A copolymer of diethylenetriamine and adipic acid was prepared by heating a mixture of diethylenetriamine (220.5g, 2.14 moles) and adipic acid (344.9g, 2.36 moles) at 170 °C under a Dean and Stark trap for 3 hours. The product was cooled to 150 °C and diluted with water (230g) to give a 65.3% w/w copolymer solution.

In the following example, a resin was prepared at high concentration and with a high epichlorohydrin level during the alkylation step. It demonstrates how the reaction time for the second step (crosslinking) is extended.

Example 6

Polymer 2 (223.3g, 65.3% w/w) and water (19.9g) was stirred at 25 °C. Epichlorohydrin (82.4g, 1.3 mole equivalents) was added in one portion, and the temperature allowed to rise to 45 °C, with heating if necessary. This temperature was maintained for 180 minutes (timed from the addition of epichlorohydrin). Water (115.5g) was added, reducing the concentration to 40% w/w (based on initial Polymer 1 concentration) and heating applied to raise the temperature to 60 °C over 15 minutes. At the same time as the addition of water, sulphuric acid (98% w/w, 7.2g) was added. The viscosity of the solution increased with time until 116 minutes after the dilution step, when the reaction was concluded by cooling and addition of sulphuric acid (98% w/w, 1.8g) in water (100.0g). Water (1373.0g) and sulphuric acid (25% w/w, 12.2g) were separately added to the cooled solution to give a product with viscosity 49 mPa.s, 11.95% w/w and pH 4.03. Analysis showed 0.732% adsorbable organic halogen, 6330 ppm DCP, 400 ppm CPD and 0.75% inorganic chloride.

Examples 7 - 9 illustrate the use of different mineral acids for the purposes of the invention. Comparative Example 2 shows a similar preparation employing hydrochloric acid, while Comparative Example 3 demonstrates the effect on reaction time and product composition of a resin made in the same way as Examples 7 - 9 but without intermediate acid addition.

Example 7

Polymer 1 (350.5g, 49.1% w/w) and water (223.5g) was stirred at 25 °C. Epichlorohydrin (56.1g, 0.75 mole equivalent) was added in one portion, and the temperature allowed to rise to 40 °C, with heating if necessary. This temperature was maintained for 120 minutes (timed from the addition of epichlorohydrin). Water (287.0g) was added, reducing the concentration to 20% w/w (based on initial Polymer 1 concentration) and heating applied to raise the temperature to 60 °C over 20 minutes. 20 minutes after the addition of water, nitric acid (70% w/w, 3.8g) was added. The viscosity of the solution increased with time until 80 minutes after the dilution step, when the reaction was concluded by cooling and addition of nitric acid (70% w/w, 15.3g) in water (200.0g). Water (817.5g) and nitric acid (25% w/w, 44.9g) were separately added to the cooled solution to give a product with viscosity 70 mPa.s, 13.05% w/w and pH 2.71. Analysis showed 0.326% adsorbable organic halogen, 310 ppm DCP, 290 ppm CPD and 0.73% inorganic chloride.

Example 8

Polymer 1 (350.5g, 49.1% w/w) and water (223.5g) was stirred at 25 °C. Epichlorohydrin (56.1g, 0.75 mole equivalent) was added in one portion, and the temperature allowed to rise to 40 °C, with heating if necessary. This temperature was maintained for 120 minutes (timed from the addition of epichlorohydrin). Water (287.0g) was added, reducing the concentration to 20% w/w (based on initial Polymer 1 concentration) and heating applied to raise the temperature to 60 °C over 20 minutes. 20 minutes after the addition of water, orthophosphoric acid (85% w/w, 1.6g) was added. The viscosity of the solution increased with time until 76 minutes after the dilution step, when the reaction was concluded by cooling and addition of orthophosphoric acid (85% w/w, 6.5g) in water (200.0g). Water (776.8g) and orthophosphoric acid (25%

w/w, 128.6g) were separately added to the cooled solution to give a product with viscosity 97 mPa.s, 13.81% w/w and pH 2.73. Analysis showed 0.320% adsorbable organic halogen, 410 ppm, DCP, 330 ppm CPD and 0.72% inorganic chloride.

Example 9

Polymer 1 (350.5g, 49.1% w/w) and water (223.5g) was stirred at 25°C. Epichlorohydrin (56.1g, 0.75 mole equivalent) was added in one portion, and the temperature allowed to rise to 40°C, with heating if necessary. This temperature was maintained for 120 minutes (timed from the addition of epichlorohydrin). Water (287.0g) was added, reducing the concentration to 20% w/w (based on initial Polymer 1 concentration) and heating applied to raise the temperature to 60°C over 20 minutes. 20 minutes after the addition of water, sulphuric acid (98% w/w, 2.1g) was added. The viscosity of the solution increased with time until 71 minutes after the dilution step, when the reaction was concluded by cooling and addition of sulphuric acid (98% w/w, 8.5g) in water (200.0g). Water (802.2g) and sulphuric acid (25% w/w, 37.7g) were separately added to the cooled solution to give a product with viscosity 75 mPa.s, 13.03% w/w and pH 2.72. Analysis showed 0.300% adsorbable organic halogen, solution increased with time until 62 minutes after the dilution step, when the reaction was concluded by cooling and addition of sulphuric acid (98% w/w, 10.6g) in water 310 ppm DCP, 280 ppm CPD and 0.75% inorganic chloride.

Comparative Example 2

Polymer 1 (350.5g, 49.1% w/w) and water (223.5g) was stirred at 25°C. Epichlorohydrin (56.1g, 0.75 mole equivalent) was added in one portion, and the temperature allowed to rise to 40°C, with heating if necessary. This temperature was maintained for 120 minutes (timed from the addition of epichlorohydrin). Water (287.0g) was added, reducing the concentration to 20% w/w based on initial Polymer 1 concentration) and heating applied to raise the temperature to 60°C over 20 minutes. 20 minutes after the addition of water, hydrochloric acid (36% w/w, 4.3g) was added. The viscosity of the solution increased with time until 76 minutes after the dilution step, when the reaction was concluded by cooling and addition of hydrochloric acid (36% w/w, 17.0g) in water (200.0g). Water (770.2g) and hydrochloric acid (36% w/w, 21.0g) were separately added to the cooled solution to give a product with viscosity 83 mPa.s, 13.14% w/w and pH 2.62. Analysis showed 0.335% adsorbable organic halogen, 430 pm DCP, 300 ppm CPD and 1.52% inorganic chloride.

Comparative Example 3

Polymer 1 (350.5g, 49.1% 2/2) and water (223.5g) was stirred at 25°C. Epichlorohydrin (56.1g. 0.75 mole equivalent) was added in one portion, and the temperature allowed to rise to 40°C, with heating if necessary. This temperature was maintained for 120 minutes (timed from the addition of epichlorhydrin). Water (287.0g) was added, reducing the concentration to 20% w/w (based on initial Polymer 1 concentration) and heating applied to raise the temperature to 60°C over 20 minutes. The viscosity of the solution increased with time until 62 minutes after the dilution step, when the reaction was concluded by cooling and addition of sulphuric acid (98% w/w, 10.6g) in water (200.0g). Water (814.2g) and sulphuric acid (25% w/w, 41.2g) were separately added to the cooled solution to give a product with viscosity 40 mPa.s, 12.89% w/w and pH 2.72. Analysis showed 0.281% adsorbable organic halogen, 340 ppm DCP, 310 ppm CPD and 0.68% inorganic chloride.

Examples 10 and 11 show the importance of adding acid at an intermediate stage in the resin preparation and should be compared with Comparative Example 4, which has the acid addition at the same time as the epichlorohydrin, at the start of the alkylation step.

Example 10

Polymer 1 (344,7g, 50.6% w/w) and water (230.1g) was stirred at 25°C. Epichlorohydrin (68.8g, 0.8 mole equivalent) was added in one portion, and the temperature allowed to rise to 40°C, with heating if necessary. This temperature was maintained ro 120 minutes (timed from the addition of epichlorohydrin). Water (282.4g) was added, reducing the concentration to 20% w/w (based on initial Polymer 1 concentration) and heatng applied to raise the temperature to 90°C over 20 minutes. 20 minutes after the addition of water, sulphuric acid (98% w/w, 11.7g) was added. The viscosity of the solution increased with time until 68 minutes after the dilution step, when the reaction was concluded by cooling and addition of water (200.0g).

Water (895.8g) and sulphuric acid (25% w/w, 15.7g) were separately added to the cooled solution to give a product with viscosity 79 mPa.s, 12.16% w/w and pH 2.67. Analysis showed 0.204% adsorbable organic halogen, 1030 ppm DCP, 410 ppm CPD and 0.89% inorganic chloride.

Example 11

Polymer 1 (344.9g, 49.1% w/w) and water (219.9g) was stirred at 25°C. Epichlorohydrin (58.9g, 0.8 mole equivalent) was added in one portion, and the temperature allowed to rise to 40°C, with heating if necessary. This temperature was maintained for 120 minutes (timed from the addition of epichlorohydrin). Water (282.4g) was added, reducing the concentration to 20% w/w (based on initial Polymer 1 concentration) and heating applied to raise the temperature to 60°C over 20 minutes. At the same time as the addition of water, sulphuric acid (98% w/w, 2.1g) was added. The viscosity of the solution increased with time until 106 minutes after the dilution step, when the reaction was concluded by cooling and addition of sulphuric acid (98% w/w, 8.4g) in water (200.0g). Water (824.1g) and sulphuric acid (25% w/w, 23.0g) were separately added to the cooled solution to give a product with viscosity 63 mPa.s, 12.62% w/w and pH 2.71. Analysis showed 0.287% adsorbable organic halogen, 700 ppm DCP, 330 ppm CPD and 0.84% inorganic chloride.

Comparative Example 4

Polymer 1 (344.9g), 49.1% w/w) and water (244.9g) was stirred at 20°C. Epichlorohydrin (50.0g, 0.8 mulu equivalent) was added in one portion, and the temperature allowed to rise to 40°C, with heating if necessary. Immediately following the epichlorohydrin in addition, sulphuric acid (98% w/w, 2.1g) was added. The temperature was maintained for 120 minutes (timed from the addition of epichlorohydrin). Water (257.4g) was added, reducing the concentration to 20% w/w (based on initial Polymer 1 concentration) and heating applied to raise the temperature to 60°C over 20 minutes. The viscosity of the solution increased with time until 95 minutes after the dilution step, when the reaction was concluded by cooling and addition of sulphuric acid (98% w/w, 8.4g) in water (200.0g). Water (824.1g) and sulphuric acid (25% w/w, 28.4g) were separately added to the cooled solution to give a product with viscosity 59 mPa.s, 12.78% w/w and pH 2.71. Analysis showed 0.302% adsorbable organic halogen, 1160 ppm DCP, 500 ppm CPD and 0.82% inorganic chloride.

In Comparative Example 5 a resin was made with a low epichlorohydrin level but without intermediate acid addition. Contrast the crosslinking reaction time with Example 12, which is identical except for the acid addition 20 minutes into the resin crosslinking step.

Comparative Example 5

Polymer 1 (395.9g, 49.1% w/w) and water (1.1g) was stirred at 20°C. Epichlorohydrin (33.8g, 0.4 mole equivalent) was added in one portion, and the temperature maintained at 20°C. This temperature was maintained for 60 minutes (timed from the addition of epichlorohydrin). Water (251.4g) was added, reducing the concentration to 30% w/w (based on initial Polymer 1 concentration) and heating applied to raise the temperature to 50°C over 20 minutes. The viscosity of the solution increased with time until 87 minutes after the dilution step, when the reaction was concluded by cooling and addition of sulphuric acid (98% w/w, 12.0g) in water (500.0g). Water (758.6g) and sulphuric acid (25% w/w, 85.6g) were separately added to the cooled solution to give a product with viscosity 150 mPa.s, 12.59% w/w and pH 4.00. Analysis showed 0.318% adsorbable organic halogen, 190 ppm DCP, 50 ppm CPD and 0.29% inorganic chloride.

Example 12

Polymer 1 (384.3g, 50.6% w/w) and water (4.8g) was stirred at 20°C. Epichlorohydrin (33.8g, 0.4 mole equivalent) was added in one portion, and the temperature maintained at 20°C. This temperature was maintained for 60 minutes (timed from the addition of epichlorohydrin). Water (259.4g) was added, reducing the concentration to 30% w/w (based on initial Polymer 1 concentration) and heating applied to raise the temperature to 50°C over 20 minutes. 20 minutes after the addition of water, sulphuric acid (98% w/w, 12.0g) was added. The viscosity of the solution increased with time until 145 minutes after the dilution step, when the reaction was concluded by cooling and addition of water (500.0g). Water (758.6g) and sulphuric acid (25% w/w, 76.2g) were separately added to the cooled solution to give a product with viscosity 148 mPa.s, 12.90% w/w and pH 4.07. Analysis showed 0.247% adsorbable organic halogen, 20 ppm DCP, 40

ppm CPD and 0.37% inorganic chloride.

Examples 13 and 14 demonstrate the utility of the invention for extending the duration of the crosslinking time for the preparation of resins using high concentrations of reactants during the crosslinking step.

Example 13

Polymer 1 (493.5g, 50.66% w/w) and water (6.5g) was stirred at 25°C. Epichlorohydrin (86.9g, 0.8 mole equivalent) was added in one portion, and the temperature controlled at 25°C. This temperature was maintained for 240 minutes (timed from the addition of epichlorohydrin). Sulphuric acid (98% w/w, 3.1g) was added and heating applied to raise the temperature to 60°C over 10 minutes. The viscosity of the solution increased with time until 30 minutes after the acid addition, when the reaction was concluded by cooling and addition of sulphuric acid (98% w/w, 36.6g) in water (101g). Sulphuric acid (25% w/w, 36.6g) was added to the cooled solution to give a product with viscosity 462 mPa.s, 52.2% w/w and pH 2.26. Analysis showed 3.06% adsorbable organic halogen, 2795 ppm DCP, 666 ppm CPD and 1.033% inorganic chloride.

Example 14

Polymer 1 (605.8g, 49.52% w/w) and water 144.2g) was stirred at 25°C. Epichlorohydrin (104.2g, 0.8 mole equivalent) was added in one portion, and the temperature allowed to rise to 40°C, with heating if necessary. This temperature was maintained for 60 minutes (timed from the addition of epichlorohydrin). Water (750g) was added, reducing the concentration to 20% w/w (based on initial Polymer 1 concentration) and heating applied to raise the temperature to 60°C over 20 minutes. Simultaneously with the addition of water, sulphuric acid (98% w/w, 3.7g) was added. The viscosity of the solution increased with time until 172 minutes after the acid addition, when the reaction was concluded by cooling and addition of sulphuric acid (98% w/w, 23.4g) in water (360g). Sulphuric acid (25% w/w, 21.9g) was added to the cooled solution to give a product with viscosity 51 mPa.s, 21.78% w/w and pH 1.96. Analysis showed 0.529% adsorbable organic halogen, 1684 ppm DCP, 595 ppm CPD and 1.367% inorganic chloride.

## Claims

1. A method for synthesizing water soluble polyaminopolyamide-epichlorohydrin resins comprising: (a) reacting an aqueous solution of a polyaminopolyamide resin having a concentration of 13.5% to 70% by weight with from 0.05 to 1.5 molar equivalents of epichlorohydrin based on the secondary amine nitrogen content of the polyaminopolyamide resin at a temperature not exceeding 60°C until 70% to 100% of the total charge of epichlorohydrin has reacted; (b) adding from 0.1% to 30% of an equivalent of a halogen-free mineral acid based on the original secondary amine nitrogen content of the polyaminopolyamide resin at a temperature of from 20°C to 100°C; and (c) continuing the reaction at a temperature of 20°C to 100°C to effect at least a 10% reduction in the polymer bound organochlorine concentration, based on the composition of the reaction mixture at the time of the acid addition.

2. A method as recited in claim 1 wherein the halogen-free mineral acid is selected from the group consisting of sulphuric acid, phosphoric acid, nitric acid, and sodium hydrogen sulphate.

3. A method as recited in claim 1 wherein the halogen-free mineral acid is sulphuric acid.

4. A method as recited in claim 1, 2 or 3 wherein the polyaminopolyamide resin solution reacted with epichlorohydrin has a concentration of from 20% to 60% by weight.

5. A method as recited in any one of claims 1 to 4 wherein the polyaminopolyamide-epichlorohydrin reaction continues until 90% to 100% of the total charge of epichlorohydrin has reacted.

6. A method as recited in any one of claims 1 to 5 wherein the polyaminopolyamide-epichlorohydrin reaction is carried out at a temperature of 20°C to 45°C.

7. A method as recited in any one of claims 1 to 6 wherein from 0.5 to 1.1 molar equivalents of epichlorohydrin are added to the polyaminopolyamide resin.

8. A method as recited in any one of claims 1 to 7 wherein the addition of the mineral acid is carried out at a temperature of 30 ° C to 60 ° C.

9. A method as recited in any one of claims 1 to 8 wherein the reaction of polyaminopolyamide-epichlorohydrin and the halogen-free mineral acid is continued at a temperature of 50 ° C to 90 ° C.

10. A method as recited in any one of claims 1 to 9 wherein 0.5% to 20% of a molar equivalent of the halogen-free mineral acid is added.

11. A method as recited in any one of claims 1 to 10 wherein the polyaminopolyamide resin is a long chain polymer having the following polymer recurring units

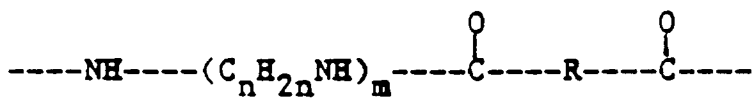

where n and m can be individually 2 or more and R is a linear $C_1$ to $C_8$ aliphatic diradical.

12. A method as recited in claim 11 wherein the polyaminopolyamide resin is prepared by the polycondensation of polyalkylene polyamines and dicarboxylic compounds selected from the group consisting of dicarboxylic acids, dicarboxylic acid mono $C_1$-$C_4$ alkyl esters, and dicarboxylic acid di $C_1$-$C_4$ alkyl esters.

13. A method as recited in claim 12 wherein the polyaminopolyamide is prepared from diethylenetriamine and adipic acid.

14. A method for preparing water soluble polyaminopolyamide-epichlorohydrin resins having reduced epichlorohydrin residuals comprising: (a) reacting an aqueous solution of a polyaminopolyamide resin having a concentration of 20% to 60% by weight prepared from diethylenetriamine and adipic acid with 0.5 to 1.1 molar equivalents of epichlorohydrin based on the secondary amino nitrogen content of the polyaminopolyamide resin at a temperature of 20 ° C to 45 ° C until 90% to 100% of the total charge of epichlorohydrin has reacted; (b) adding from 0.1% to 30% of an equivalent of a mineral acid selected from the group consisting of sulphuric acid, phosphoric acid, nitric acid, and sodium hydrogen sulphate based on the original secondary amino nitrogen content of the polyaminopolyamide resin at a temperature of 30 ° C to 60 ° C; and (c) continuing the reaction at a temperature of 50 ° C to 90 ° C to effect at least a 10% reduction in the polymer bound organochlorine concentration, based on the composition of the reaction mixture at the time of the acid addition.

15. A method as recited in claim 14 wherein the mineral acid is sulphuric acid.

16. A method as recited in claim 14 or claim 15 wherein a 50% aqueous solution of polyaminopolyamide resin is reacted with 0.8 molar equivalents of epichlorohydrin at 40 ° C to 45 ° C; adding 2.0% to 22% of an equivalent of sulphuric acid at a temperature of 40 ° C to 60 ° C; and continuing the reaction at a temperature of 60 ° C to effect at least a 5% reduction in the polymer bound organochlorine concentration based on the composition of the reaction mixture at the time of the acid addition.

17. A water soluble polyaminopolyamide-epichlorohydrin composition containing from 0.01% to 1.0% epichlorohydrin residual where the epichlorohydrin residual is the sum of the 1,3-dichloro-2-propanol and 1-chloro-2,3-propanediol concentrations, and the composition is prepared as recited in any one of claims 1 to 16.

18. A cationic thermosetting water soluble polyaminopolyamide-epichlorohydrin resin prepared as recited in claim 14.

## Patentansprüche

1. Verfahren zur Herstellung wasserlöslicher Polyaminopolyamid-Epichlorhydrinharze, umfassend:
(a) Umsetzung einer wässerigen Lösung von Polyaminopolyamidharz, die eine Konzentration von 13,5 % bis 70 Gew.-% aufweist, mit 0,05 bis 1,5 Moläquivalenten Epichlorhydrin, bezogen auf den Anteil an sekundärem Aminstickstoff des Polyaminopolyamidharzes, bei einer Temperatur, die 60 ° C nicht übersteigt, bis 70 % bis 100 % der gesamten Beschickung an Epichlorhydrin umgesetzt wurden; (b) Zugabe von 0,1 % bis 30 % eines Äquivalents einer halogenfreien Mineralsäure, bezogen auf den ursprünglichen Anteil an sekundärem Aminstickstoff des Polyaminopolyamidharzes, bei einer Temperatur von 20 ° C bis 100 ° C; und (c) Fortsetzen der Reaktion bei einer Temperatur von 20 ° C bis 100 ° C unter Bewirkung einer zumindest 10 %-igen Verminderung der Konzentration an polymergebundenem Organochlor, bezogen auf die Zusammensetzung des Reaktionsgemisches zum Zeitpunkt der Säurezugabe.

2. Verfahren nach Anspruch 1, wobei die halogenfreie Mineralsäure ausgewählt ist aus der Gruppe, bestehend aus Schwefelsäure, Phosphorsäure, Salpetersäure und Natriumhydrogensulfat.

3. Verfahren nach Anspruch 1, wobei die halogenfreie Mineralsäure Schwefelsäure ist.

4. Verfahren nach Anspruch 1, 2 oder 3, wobei die Polyaminopolyamidharzlösung mit Epichlorhydrin bei einer Konzentration von 20 bis 60 Gew.-% umgesetzt wird.

5. Verfahren nach einem der Ansprüche 1 bis 4, wobei die Polyaminopolyamid-Epichlorhydrinumsetzung fortgeführt wird bis 90 bis 100 % der Gesamtbeschickung an Epichlorhydrin umgesetzt wurden.

6. Verfahren nach einem der Ansprüche 1 bis 5, wobei die Polyaminopolyamid-Epichlorhydrinumsetzung bei einer Temperatur von 20 ° C bis 45 ° C ausgeführt wird.

7. Verfahren nach einem der Ansprüche 1 bis 6, wobei 0,5 bis 1,1 Moläquivalente Epichlorhydrin zu dem Polyaminopolyamidharz zugegeben werden.

8. Verfahren nach einem der Ansprüche 1 bis 7, wobei die Zugabe von Mineralsäure bei einer Temperatur von 30 ° C bis 60 ° C ausgeführt wird.

9. Verfahren nach einem der Ansprüche 1 bis 8, wobei die Umsetzung von Polyaminopolyamid-Epichlorhydrin und der halogenfreien Mineralsäure bei einer Temperatur von 50 ° C bis 90 ° C fortgeführt wird.

10. Verfahren nach einem der Ansprüche 1 bis 9, wobei 0,5 % bis 20 % eines Moläquivalents der halogenfreien Mineralsäure zugegeben werden.

11. Verfahren nach einem der Ansprüche 1 bis 10, wobei das Polyaminopolyamidharz ein langkettiges Polymer mit nachstehenden wiederkehrenden Polymereinheiten ist

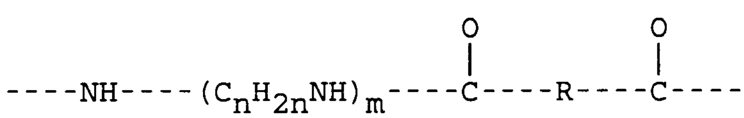

wobei n und m einzeln 2 oder mehr bedeuten können und R ein lineares $C_1$- bis $C_8$-aliphatisches Diradikal ist.

12. Verfahren nach Anspruch 11, wobei das Polyaminopolyamidharz durch Polykondensation von Polyalkylenpolyaminen und Dicarbonsäureverbindungen, ausgewählt aus der Gruppe, bestehend aus Dicarbonsäuren, Dicarbonsäuremono-$C_1$-$C_4$-alkylestern und Dicarbonsäuredi-$C_1$-$C_4$-alkylestern, hergestellt wird.

13. Verfahren nach Anspruch 12, wobei das Polyaminopolyamid aus Diethylentriamin und Adipinsäure hergestellt wird.

14. Verfahren zur Herstellung von wasserlöslichen Polyaminopolyamid-Epichlorhydrinharzen mit verminderten Epichlorhydrinrückständen, umfassend: (a) Umsetzung einer wässerigen Lösung eines Polyaminopolyamidharzes mit einer Konzentration von 20 % bis 60 Gew.-%, hergestellt aus Diethylentriamin und Adipinsäure mit 0,5 bis 1,1 Moläquivalenten Epichlorhydrin, bezogen auf den sekundären Aminstickstoffgehalt des Polyaminopolyamidharzes, bei einer Temperatur von 20 °C bis 45 °C bis 90 % bis 100 % der gesamten Beschickung an Epichlorhydrin umgesetzt wurden; (b) Zugabe von 0,1 % bis 30 % eines Äquivalents an Mineralsäure, ausgewählt aus der Gruppe, bestehend aus Schwefelsäure, Phosphorsäure, Salpetersäure und Natriumhydrogensulfat, bezogen auf den ursprünglichen Anteil an sekundärem Aninstickstoff des Polyaminopolyamidharzes bei einer Temperatur von 30 °C bis 60 °C; und (c) Fortsetzung der Reaktion bei einer Temperatur von 50 °C bis 90 °C unter Bewirkung einer zumindest 10 %-igen Verminderung der Konzentration an polymergebundenem Organochlor, bezogen auf die Zusammensetzung des Reaktionsgemisches zum Zeitpunkt der Säurezugabe.

15. Verfahren nach Anspruch 14, wobei die Mineralsäure Schwefelsäure ist.

16. Verfahren nach Anspruch 14 oder 15, wobei eine 50 %-ige wässerige Lösung von Polyaminopolyamidharz mit 0,8 Moläquivalenten Epichlorhydrin bei 40 °C bis 45 °C umgesetzt wird, Zugabe von 2,0 % bis 22 % eines Äquivalents an Schwefelsäure bei einer Temperatur von 40 °C bis 60 °C erfolgt; und Fortsetzen der Reaktion bei einer Temperatur von 60 °C unter Bewirken einer zumindest 5 %-igen Verminderung der Konzentration an polymergebundenem Organochlor, bezogen auf die Zusammensetzung des Reaktionsgemisches zum Zeitpunkt der Säurezugabe.

17. Wasserlösliche Polyaminopolyamid-Epichlorhydrin-Zusammensetzung, enthaltend 0,01 % bis 1,0 % Epichlorhydrinrückstand, wobei der Epichlorhydrinrückstand die Summe der Konzentrationen von 1,3-Dichlor-2-propanol und 1-Chlor-2,3-propandiol ist und die Zusammensetzung gemäß einem der Ansprüche 1 bis 16 hergestellt wird.

18. Kationisches wärmehärtbares wasserlösliches Polyaminopolyamid-Epichlorhydrinharz, hergestellt nach Anspruch 14.

## Revendications

1. Procédé de synthèse de résines de polyaminopolyamide-épichlorohydrine solubles dans l'eau comprenant les étapes suivantes : (a) réaction d'une solution aqueuse d'une résine de polyaminopolyamide présentant une concentration de 13,5% à 70% en poids avec 0,05 à 1,5 équivalent molaire d'épichlorohydrine sur la base de la teneur en azote de l'amine secondaire de la résine de polyaminopolyamide à une température ne dépassant pas 60 °C jusqu'à ce que 70 à 100% de la charge totale d'épichlorohydrine ait réagi; (b) addition de 0,1 à 30% d'un équivalent d'un acide minéral exempt d'halogène sur la base de la teneur en azote d'amine secondaire initiale de la résine de polyaminopolyamide à une température de 20 à 100 °C; et (c) poursuite de la réaction à une température de 20 à 100 °C pour effectuer une réduction d'au moins 10% dans la concentration en chlore organique lié au polymère, sur la base de la composition du mélange réactionnel au moment de l'addition de l'acide.

2. Procédé suivant la revendication 1 caractérisé en ce que l'acide minéral exempt d'halogène est choisi dans le groupe constitué par : acide sulfurique, acide phosphorique, acide nitrique et sulfate acide de sodium.

3. Procédé suivant la revendication 1 caractérisé en ce que l'acide minéral exempt d'halogène est l'acide sulfurique.

4. Procédé suivant l'une quelconque des revendications 1,2 ou 3 caractérisé en ce que la concentration de la solution de résine de polyaminopolyamide qui a réagi avec l'épichlorohydrine est comprise entre 20 et 60% en poids.

5. Procédé suivant l'une quelconque des revendications 1 à 4 caractérisé en ce que la réaction polyaminopolyamide-épichlorohydrine se poursuit jusqu'à ce que 90 à 100% du total de la charge d'épichlorohydrine ait réagi.

**6.** Procédé suivant l'une quelconque des revendications 1 à 5 caractérisé en ce que la réaction polyaminopolyamide-épichlorohydrine est mise en oeuvre à une température de 20 à 45 ° C.

**7.** Procédé suivant l'une quelconque des revendications 1 à 6 caractérisé en ce que 0,5 à 1,1 équivalents molaires d'épichlorohydrine sont ajoutés à la résine de polyaminopolyamide.

**8.** Procédé suivant l'une quelconque des revendications 1 à 7 caractérisé en ce que l'addition de l'acide minéral est mise en oeuvre à une température de 30 à 60 ° C.

**9.** Procédé suivant l'une quelconque des revendications 1 à 8 caractérisé en ce que la réaction de la polyaminopolyamide-épichlorohydrine et de l'acide minéral exempt d'halogène est poursuivie à une température de 50 à 90 ° C.

**10.** Procédé suivant l'une quelconque des revendications 1 à 9 caractérisé en ce qu'on ajoute de 0,5 à 20% d'un équivalent molaire de l'acide minéral exempt d'halogène.

**11.** Procédé suivant l'une quelconque des revendications 1 à 10 caractérisé en ce que la résine de polyaminopolyamide est un polymère à chaîne longue renfermant les motifs polymères récurrents suivants :

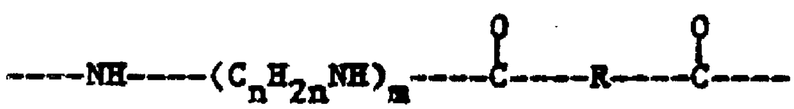

dans lesquels n et m peuvent être individuellement égaux ou supérieurs à 2 et R est un diradical aliphatique linéaire en $C_1$ à $C_8$.

**12.** Procédé suivant la revendication 11 caractérisé en ce que la résine de polyaminopolyamide est préparée par polycondensation de polyalkylène polyamines et de dérivés dicarboxyliques choisis dans le groupe constitué par : acides dicarboxyliques, mono alkyle esters en $C_1$ à $C_4$ d'acide dicarboxylique et di alkyl esters en $C_1$ à $C_4$ d'acide dicarboxylique.

**13.** Procédé suivant la revendication 12 caractérisé en ce que le polyaminopolyamide est préparé à partir de diéthylènetriamine et d'acide adipique.

**14.** Procédé de préparation de résines de polyaminopolyamide-épichlorohydrine solubles dans l'eau présentant une teneur réduite en résidus d'épichlorohydrine comprenant les étapes suivantes : (a) réaction d'une solution aqueuse d'une résine de polyaminopolyamide présentant une concentration de 20 à 60% en poids, préparée à partir de diéthylènetriamine et d'acide adipique avec 0,5 à 1,1 équivalent molaire d'épichlorohydrine sur la base de la teneur en azote de l'amine secondaire de la résine de polyaminopolyamide, à une température de 20 à 45 ° C, jusqu'à ce que 90 à 100% de la charge totale d'épichlorohydrine ait réagi; (b) addition de 0,1 à 30% d'un équivalent d'un acide minéral choisi dans le groupe constitué par : acide sulfurique, acide phosphorique, acide nitrique et sulfate acide de sodium, sur la base de la teneur en azote de l'amine secondaire initiale de la résine de polyaminopolyamide, à une température de 30 à 60 ° C; et (c) poursuite de la réaction à une température de 50 à 90 ° C pour effectuer une réduction d'au moins 10% dans la concentration en chlore organique lié au polymère, sur la base de la composition du mélange réactionnel au moment de l'addition d'acide.

**15.** Procédé suivant la revendication 14 caractérisé en ce que l'acide minéral est l'acide sulfurique.

**16.** Procédé suivant l'une quelconque des revendications 14 ou 15 caractérisé en ce qu'on fait réagir une solution aqueuse à 50% de résine de polyaminopolyamide avec 0,8 équivalent molaire d'épichlorohydrine à une température de 40 à 45 ° C; on ajoute 2,0 à 22% d'un équivalent de l'acide sulfurique à une température de 40 à 60 ° C; et on poursuit la réaction à une température de 60 ° C pour effectuer une réduction d'au moins 5% dans la concentration en chlore organique lié au polymère sur la base de la

composition du mélange réactionnel au moment de l'addition d'acide.

**17.** Une composition de polyaminopolyamide-épichlorohydrine soluble dans l'eau contenant de 0,01 à 1,0% de résidu d'épichlorohydrine dans lequel la teneur résiduelle en épichlorohydrine est la somme des concentrations en 1,3-dichloro-2-propanol et 1-chloro-2,3-propanédiol et la composition est préparée suivant l'une quelconque des revendications 1 à 16.

**18.** Une résine de polyaminopolyamide-épichlorohydrine soluble dans l'eau, thermodurcissable, cationique préparée selon la revendication 14.